Europäisches Patentamt

European Patent Office

Office européen des brevets

(11) Veröffentlichungsnummer: **0 554 720 A1**

# (12) EUROPÄISCHE PATENTANMELDUNG

(21) Anmeldenummer: 93100876.7

(22) Anmeldetag: 21.01.93

(51) Int. Cl.5: **C08K 7/04**, C08L 21/00

(30) Priorität: 03.02.92 DE 4202976

(43) Veröffentlichungstag der Anmeldung:
11.08.93 Patentblatt 93/32

(84) Benannte Vertragsstaaten:
DE FR GB IT

(71) Anmelder: BAYER AG

W-5090 Leverkusen 1 Bayerwerk(DE)

(72) Erfinder: Szentivanyi, Zsolt, Dr.
13-11, 6-chome, Hatanodai, Shinagawa-ku
Tokyo 142(JP)
Erfinder: Mezger, Martin, Dr.
Benninghausen 55
W-5093 Burscheid(DE)
Erfinder: Igarashi, Nobuo
1518 Shin-Yoshida-cho, Kohoku-ku
Yokohama-shi, Kanagawa(JP)
Erfinder: Fukuda, Koji
109 Komatsu-cho
Toyohashi-shi, Aichi(JP)
Erfinder: Nakamura, Atsushi
38-3 Higashikomaha-cho
Toyohashi-shi, Aichi(JP)

(54) **Vulkanisierbare Kautschukmassen mit ausgezeichneter Verarbeitbarkeit, guter Hitzebeständigkeit sowie guten mechanischen und dynamischen Eigenschaften.**

(57) Vulkanisierbare Kautschukmassen, die asymmetrische, nadelförmige Füllstoffe mit alkalischen Oberflächen enthalten, zeichnen sich durch eine hervorragende Verarbeitbarkeit, eine gute Hitzebeständigkeit sowie gute mechanischen Eigenschaften aus.

EP 0 554 720 A1

Die Erfindung betrifft vulkanisierbare Kautschukmassen, die asymmetrische, nadelförmige Füllstoffe mit alkalischen Oberflächen enthalten, sowie die Verwendung der Kautschukmassen zur Herstellung von Gummiartikeln, wie z.B. Keilrippenriemen, Zahnriemen, extrudierte Profile und Formartikel.

Es ist bekannt, daß Kautschukmassen, denen helle, verstärkende Füllstoffe zugesetzt werden, häufig Probleme bei der Verarbeitbarkeit mit sich bringen. Es hat deshalb nicht an Versuchen gefehlt, die Verarbeitbarkeit solcher gefüllten Kautschukmassen zu verbessern, ohne daß die mechanischen Eigenschaften und/oder die Hitzebeständigkeit der Kautschukmassen wesentlich verschlechtert werden. Bislang wurde dieses Problem noch nicht befriedigend gelöst.

Überraschenderweise wurde nun gefunden, daß mit asymmetrischen, nadelförmigen Füllstoffen, die eine alkalische Oberfläche aufweisen, gefüllte Kautschukmassen eine ausgezeichnete Verarbeitbarkeit aufweisen, ohne daß die mechanischen und dynamischen Eigenschaften oder die Hitzebeständigkeit der Kautschukmassen verschlechtert werden. In Abmischung mit anderen Füllstoffen wie Ruß wurde sogar eine Verbesserung der mechanischen Eigenschaften und der Hitzebeständigkeit erzielt.

Gegenstand der Erfindung sind also vulkanisierbare Kautschukmassen enthaltend - bezogen auf eingesetzten Kautschuk - 5 bis 100 Gew.-%, bevorzugt 20 bis 80 Gew.-%, asymmetrische, nadelförmige Füllstoffe mit alkalischen Oberflächen, die einen Durchmesser von 0,05 bis 10 $\mu$m, bevorzugt 0,2 bis 0,5 $\mu$m, und ein Längen/ Durchmesser-Verhältnis von 5 bis 120, bevorzugt 20 bis 100, aufweisen.

Bevorzugt besitzen die asymmetrischen, nadelförmigen Füllstoffe alkalische Oberflächen mit einem pH-Wert von >7, ganz besonders bevorzugt 7,5 bis 11.

Als nadelförmige Füllstoffe können eingesetzt werden z.B. Kaliumtitanatwhiskers (z.B. Tofica Y® der Firma Otsuko Chem. Co. Ltd., Japan) und/oder nadelförmige Calciumsilikate (Vansil® G der Firma Vanderbilt Co,, Inc. USA).

Die asymmetrischen, nadelförmigen Füllstoffe wie die Kaliumtitanatwhiskers können auch im Gemisch mit anderen herkömmlichen Füllstoffen, wie Ruß, Zinkoxid, Magnesiumoxid, Talkum und Kreide, den vulkanisierbaren Kautschukmassen zugesetzt werden. Die Menge dieser Füllstoffe hängt von dem gewünschten Eigenschaftsbild der herzustellenden Gummiartikeln ab und kann leicht durch Vorversuche ermittelt werden. Üblicherweise werden diese Füllstoffe in Mengen von ca. 10 bis 100, bevorzugt 20 bis 80 Gewichtsteilen, bezogen auf 100 Gewichtsteile Kautschuk, eingesetzt.

Selbstverständlich ist es auch möglich den vulkanisierbaren Kautschukmassen noch andere Hilfsmittel, wie beispielsweise Weichmacher, Harze und Stabilisatoren, zur Erzielung bestimmter Rohmischungs- oder Vulkanisationseigenschaften zuzusetzen. Diese Hilfsmittel werden in den üblichen Mengen zugesetzt; die günstigste Menge läßt sich leicht durch geeignete Vorversuche ermitteln.

Die nadelförmigen Füllstoffe lassen sich in den bekannten Kautschuken durch Mischen auf üblichen Mischaggregaten einarbeiten. Als Kautschuke können eingesetzt werden Naturkautschuke, Nitrilkautschuke, hydrierte Nitrilkautschuke, Ethylen-Propylen-Dienpolymerisate, Isobutylen-Isopren-Kautschuke, Butadien-Kautschuke, Styrol-Butadien-Kautschuke, Chloropren-Kautschuke, chlorierte Polyethylene, chlorsulfonierte Polyethylene, Acrylat-Kautschuke sowie Mischungen der genannten Kautschuke untereinander. Die genannten Kautschuke sind bekannt und beispielsweise zusammenfassend beschrieben in Ullmann, Bd. 13, 4, Aufl. 1977, S. 581ff.

Aus den erfindungsgemäßen Kautschukmassen können durch Vulkanisation in üblicher weise Vulkanisate hergestellt werden, die in Gestalt jeglicher denkbarer Formkörper (Schläuche, Dichtungen, Antriebselemente, wie Keilrippenriemen und Zahnriemen, Reibelemente und Formartikel) Verwendung finden.

Beispiele
_____

Verwendete Komponenten:
NR:                             Naturkautschuk SMR5
NBR I:                        Nitrilkautschuk der Firma Bayer AG, Leverkusen mit einem Acrylnitrilgehalt von 34 %, Mooney-Viskosität von 45 (ML 1 + 4)/100 ° C
HNBR I:                      Hydrierungsprodukt eines Butadien/Acrylnitril-Copolymerisats mit einem Acrylnitrilgehalt von 34 % und einem Restdoppelbindungsgehalt von 3,8 %, Mooney-Viskosität von 70 (ML 1 + 4)/100 ° C der Firma Bayer AG, Leverkusen
HNBR II:                   Hydrierungsprodukt eines Butadien/Acrylnitril-Copolymerisats mit einem Acrylnitrilgehalt von 34 % und einem Restdoppelbindungsgehalt von 6 %, Mooney-Viskosität von 72 (ML 1 + 4)/100 ° C der Firma Bayer AG, Leverkusen
HNBR III:                 Hydrierungsprodukt eines Butadien/Acrylnitril-Copolymerisats mit einem Acrylnitrilgehalt von 39 % und einem Restdoppelbindungsgehalt von 1 %, Mooney-Viskosität von 78 (ML 1 + 4)/100 °C der Firma Bayer AG, Leverkusen

| | |
|---|---|
| Magnesiumoxid: | ®Maglite der Firma Merck/USA |
| gefällte Kieselsäure: | ®Vulkasil S der Firma Bayer AG, Leverkusen |
| Kaliumtitanatwhiskers: | ®Tofica Y der Firma Otsuka Chemical Co. Ltd., Japan |
| Ruß CB N 550: | Degussa AG, Wesseling |
| Etherthioether: | ®Vulkanol OT der Bayer AG, Leverkusen |
| Zinkoxid: | ®Zinkoxidaktiv der Firma Bayer AG, Leverkusen |
| ODPA: | Bayer AG, Leverkusen (Vulkanox OCD) |
| ZMMBI: | Bayer AG, Leverkusen (Vulkacit ZMB-2) |
| styrolisiertes Diphenylamin: | Bayer AG, Leverkusen (Vulkanox DDA) |
| TBBS: | Bayer AG, Leverkusen (Vulkacit NZ) |
| TMTD: | ®Vulkacit Thiuram C der Firma Bayer AG, Leverkusen |
| CBS: | ®Vulkasit CZ/MG der Firma Bayer AG, Leverkusen |

Compoundierung

Die Mischungsherstellung erfolgte auf einem Walzwerk bei 30 °C Walzentemperatur und einem Friktionsverhältnis von 1 zu 1,2. Die Mischzeit betrug ca. 20 bis 30 min, wobei das Mischgut sich auf Temperaturen von 50 - 70 °C erwärmte.

Die Füllstoffmenge wurde jeweils so bemessen, daß Vulkanisate mit annähernd gleicher Härte (Shore A) resultierten.

Aus den vulkanisierbaren Mischungen wurden Platten mit den Abmessungen 20 x 20 cm hergestellt, wobei die Vulkanisationsbedingungen die folgenden waren: bei schwefelhaltigen Vulkanisationssystemen 15 - 20 min bei 160 °C; bei Peroxidvernetzungssystemen 10 min bei 190 °C.

Aus den vulkanisierten Platten wurden zur Bestimmung der mechanischen Eigenschaften S-2 Stäbe nach DIN ausgestanzt und geprüft.

Aus den nachfolgenden Tabellen sind die entsprechenden Werte zu entnehmen. Die für die Rezeptur angegebenen Zahlen sind Gewichtsteile.

## Beispiel 1

**Tabelle 1**

| NR | 1 | 2 | 3 | 4 | 5 | 6 | 7 | 8 |
|---|---|---|---|---|---|---|---|---|
| NR | 100 | 100 | - | - | - | - | - | - |
| NBR I | - | - | 100 | 100 | - | - | - | - |
| HNBR I | - | - | - | - | 100 | 100 | 100 | 100 |
| Stearinsäure | 1 | 1 | 1 | 1 | 0,75 | 0,75 | 0,75 | 0,75 |
| MgO | - | - | 3 | 3 | - | - | - | - |
| gefällte Kieselsäure | 40 | - | 40 | - | - | - | - | - |
| Kaliumtitanat-whiskers** | - | 65 | - | 65 | 20 | 40 | 65 | - |
| Ruß CB N 550 | - | - | - | - | - | - | - | 50 |
| Etherthioether* | - | - | 8 | 8 | 10 | 10 | 10 | 10 |
| $ZnO_2$ | - | - | - | - | 5 | 5 | 5 | 5 |
| ZnO | 3 | 3 | 3 | 3 | - | - | - | - |
| ODPA | 1 | 1 | 1,5 | 1,5 | - | - | - | - |
| ZMMBI | - | - | 1,0 | 1,0 | 1 | 1 | 1 | 1 |
| styrolisiertes Diphenylamin | - | - | - | - | 1 | 1 | 1 | 1 |
| TBBS | 0,8 | 0,8 | 0,7 | 0,7 | - | - | - | - |
| TMTD | - | - | 3,0 | 3,0 | 2 | 2 | 2 | 2 |
| Schwefel | 1,5 | 1,5 | 0,7 | 0,7 | 0,5 | 0,5 | 0,5 | 0,5 |
| CBS | - | - | - | - | 0,5 | 0,5 | 0,5 | 0,5 |
| Mischungs-ML (1+4)100 | 74 | 11 | 77 | 35 | 40 | 43 | 46 | 74 |
| Härte (Shore A) | 62 | 55 | 71 | 68 | 59 | 63 | 67 | 72 |

NR: SMR 5
NBR I: ACN 34 %; ML (1+4) $100^0$ C = 45
HNBR I: ACN 34 %; ML (1+4) $100^0$ C = 70;
3,8 % Restdoppelbindungsgehalt

\* Vulkanol OT (Bayer AG)
\*\* Tofica Y (Otsuka Chemical Co. Ltd. Japan)

EP 0 554 720 A1

**Beispiel 1**

| NR | 1 | 2 | 3 | 4 | 5 | 6 | 7 | 8 |
|---|---|---|---|---|---|---|---|---|

Bruchdehnung nach

Alterung

$(D_t-D_o)/D_o$ (%) · 100

| | | | | | | | | |
|---|---|---|---|---|---|---|---|---|
| 1.  100°C  72 h | -30 | -14 | - | - | - | - | - | - |
| 2.  140°C  72 h | - | - | -46 | -19 | -1 | +3 | +10 | -13 |
| 3.  140°C  336 h | - | - | - | - | -17 | -16 | -8 | -52 |

**Ergebnis:** 1) In allen Fällen, in denen die nadelförmigen Füllstoffe eingesetzt werden, erhält man höhere Dosierung im Vergleich zum hellen, verstärkenden Füllstoff und zum Ruß sowie eine deutlich niedrigere Mooneyviskosität bei annähernd vergleichbarer Vulkanisathärte.

2) Die Änderung der Bruchdehnung als Maß für den Alterungsprozeß ist in allen Fällen deutlich geringer bei Verwendung des nadelförmigen Füllstoffs.

EP 0 554 720 A1

EP 0 554 720 A1

### T a b e l l e   2

| | 1 | 2 | 3 | 4 | 5 | 6 | 7 |
|---|---|---|---|---|---|---|---|
| HNBR II | 100 | 100 | 100 | - | - | - | - |
| HNBR III | - | - | - | 100 | 100 | 100 | 100 |
| Stearinsäure | 0,75 | 0,75 | 0,75 | | | | |
| ZnO | 3 | 3 | 3 | 2 | 2 | 2 | 2 |
| MgO | | | | 2 | 2 | 2 | 2 |
| Kaliumtitanat-whiskers | 75 | - | 37 | 75 | - | 50 | 25 |
| N 550-Ruß | - | 44 | 22 | - | - | - | - |
| N 762-Ruß | | | | - | 63 | 21 | 42 |
| Phthalsäurepoly-ester*** | 7 | 7 | 7 | - | - | - | - |
| ODPA | 2 | 2 | 2 | 1 | 1 | 1 | 1 |
| ZMMBI | 2 | 2 | 2 | 0,4 | 0,4 | 0,4 | 0,4 |
| TAIC* | | | | 1,5 | 1,5 | 1,5 | 1,5 |
| Peroxid** | | | | 7 | 7 | 7 | 7 |
| Schwefel | 0,5 | 0,5 | 0,5 | - | - | - | - |
| CBS | 0,5 | 0,5 | 0,5 | - | - | - | - |
| TMTD | 2,0 | 2,0 | 2,0 | - | - | - | - |

\* TAIC: Triallylisocyanurat der Fa. Akzo

\*\* Peroxid: Bis(tert.-butylperoxyisopropyl)benzol, 40 %ig, der Fa. Akzo

\*\*\* ®Ultramoll PP, Bayer AG, Leverkusen

ODPA: octyliertes Diphenylamin

ZMMBI: Zinksalz des 4- bzw. 5-Methylmercaptobenzimidazols

CBS: Benzothiazyl-2-cyclohexylsulfenamid

TMTD: Tetramethylthiuramdisulfid

Tabelle 2 (Fortsetzung)

| | 1 | 2 | 3 | 4 | 5 | 6 | 7 |
|---|---|---|---|---|---|---|---|
| Mischungs- | | | | | | | |
| ML (1+4)100° C (ME) | 52 | 76 | 62 | 74 | 102 | 85 | 95 |
| Härte (Shore A) | 69 | 69 | 69 | 73 | 73 | 73 | 73 |
| Festigkeit (kp/cm³) | 143 | 309 | 334 | 122 | 263 | 207 | 242 |
| Dehnung (%) | 610 | 610 | 603 | 294 | 228 | 281 | 269 |
| Bruchdehnung nach Alterung $(D_t-D_0)/D_0 \cdot 100$ (%) | | | | | | | |
| 140° C 72 h | -16 | -38 | -23 | - | - | - | - |
| 140° C 24 h | -5 | -17 | -12 | - | - | - | - |
| 175° C 72 h | | | | 0 | -25 | -11 | -15 |

Ergebnis: Die Mischungen mit nadelförmigen Füllstoffen zeigen wiederum eine deutlich niedrigere Mischungsviskosität bei gleicher Vulkanisathärte.

Auch die Alterungsbeständigkeit der Vulkanisate mit den nadelförmigen Füll-stoffen, gemessen als relativem Erhalt der Bruchdehnung, ist deutlich besser.

**Patentansprüche**

1. Vulkanisierbare Kautschukmassen enthaltend - bezogen auf eingesetzten Kautschuk - 5 bis 100 Gew.-% asymmetrische, nadelförmige Füllstoffe mit alkalischen Oberflächen, die einen Durchmesser von

7

0,05 bis 10 $\mu$m und ein Längen/Durchmesser-Verhältnis von 5 bis 120 aufweisen.

2. Vulkanisierbare Kautschukmassen nach Anspruch 1, dadurch gekennzeichnet, daß als nadelförmige Füllstoffe Kaliumtitanat-Whiskers verwendet werden.

3. Vulkanisierbare Kautschukmassen, dadurch gekennzeichnet, daß die nadelförmigen Füllstoffe alkalische Oberflächen mit einem pH-Wert von >7 besitzen.

4. Verwendung der Kautschukmassen nach Anspruch 1 zur Herstellung von Vulkanisaten.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DATABASE WPIL<br>Section Ch, Week 4191,<br>Derwent Publications Ltd., London, GB;<br>Class A, AN 91-299716<br>& JP-A-3 199 248 (SUMITOMO CHEM KK) 30. August 1990<br>* Zusammenfassung *<br>--- | 1-4 | C08K7/04<br>C08L21/00 |
| X | DATABASE WPIL<br>Section Ch, Week 4683,<br>Derwent Publications Ltd., London, GB;<br>Class A, AN 83-816655<br>& JP-A-58 168 638 (JAPAN SYNTHETIC RUBBER)<br>5. Oktober 1983<br>* Zusammenfassung *<br>--- | 1-4 | |
| X | CHEMICAL ABSTRACTS, vol. 113, no. 26,<br>1990, Columbus, Ohio, US;<br>abstract no. 233204m,<br>NISHINA H. 'Abrasion-resistant fluoro rubber compositions for mechanical seals'<br>* Zusammenfassung *<br>& JP-A-2 206 639 (NOK CORP.)<br>16. August 1990<br>--- | 1-4 | |
| X | CHEMICAL ABSTRACTS, vol. 111, no. 22,<br>1989, Columbus, Ohio, US;<br>abstract no. 196168p,<br>YAMMORO Y. 'Shockproof polyolefin-elastomer compositions for automobile bumpers with low heat expansion'<br>* Zusammenfassung *<br>& JP-A-1 118 557 (MITSUBISHI MOTORS CORP.)<br>11. Mai 1989<br>----- | 1-4 | |

**RECHERCHIERTE SACHGEBIETE (Int. Cl.5)**

C08K

Der vorliegende Recherchenbericht wurde für alle Patentansprüche erstellt

| Recherchenort | Abschlußdatum der Recherche | Prüfer |
|---|---|---|
| DEN HAAG | 12 MAI 1993 | VAN HUMBEECK F. |